# EUROPEAN PATENT APPLICATION

(11) **EP 4 120 677 A1**
(43) Date of publication of application: **18.01.2023**
(21) Application number: 21788724.9
(22) Date of filing: 15.04.2021
(51) Int. Cl.: H04N 7/18

(54) **IMAGING SYSTEM AND IMAGING METHOD**

(30) Priority: 17.04.2020 CN 202010307352
(71) Applicant: Hangzhou Hikauto Software Co., Ltd., Hangzhou, Zhejiang 310051 (CN)
(72) Inventor: QU, Bixiang, Hangzhou, Zhejiang 310051 (CN); WANG, Yanqing, Hangzhou, Zhejiang 310051 (CN); JIN, Zhilong, Hangzhou, Zhejiang 310051 (CN)
(74) Representative: Vogelbruch, Keang
(86) International application number: PCT/CN2021/087598
(87) International publication number: WO 2021/209018

(57) **Abstract**

The present disclosure provides an imaging system and an imaging method, the imaging includes an image capturing unit, an image processor and an image display; the image capturing unit is configured to capture an image; the image processor is configured to determine position information of cropped images, corresponding to different scene modes, on the image sensor and crop the image captured through the image capturing unit based on the position information to obtain the cropped images corresponding to the different scene modes; and the image display is configured to display the received cropped images.

## Description

### TECHNICAL FIELD

The present disclosure relates to the field of image processing, and in particular, to an imaging system and an imaging method.

### BACKGROUND

With the development of intelligent driving technology applications, the needs and requirements of cameras as the eyes of intelligent vehicles are getting higher both in terms of quantity and functionality.

For different applications, the requirements of camera's field of view, observation distance and clarity may be different. For example, for rear view cameras, the requirements for cameras used in a streaming-media scene and those used in a vehicle-reversing scene have their own focus, and if the requirements for both the streaming-media scene and the vehicle-reversing scene need to be met, two cameras need to be installed.

Similarly, the same situation exists for other front-view or side-view cameras, resulting in the need to install a large number of cameras in the vehicle, which brings about an increase in cost on the one hand, affects the appearance of the vehicle on the other hand, and the mounting positions of these cameras may also conflict.

### SUMMARY

In view of this, the present disclosure provides an imaging system and an imaging method.

Specifically, the present disclosure is achieved by the following technical solution.

According to a first aspect of embodiments of the present disclosure, an imaging system is provided. The imaging system includes an image capturing unit, an image processor and an image display. There is an offset between a center of an image sensor in the image capturing unit and an optical axis of an imaging lens module in the image capturing unit. The image capturing unit is configured to capture an image; the image processor is configured to determine position information of cropped images, corresponding to different scene modes, on the image sensor and crop the image captured through the image capturing unit based on the position information to obtain the cropped images corresponding to the different scene modes, wherein at least two scene modes are supported by the imaging system, the position information of the cropped images, corresponding to the different scene modes, on the image sensor is not exactly the same, and the image processor is further configured to, based on a scene mode, transmit a corresponding cropped image to an image display corresponding to the scene mode; and the image display is configured to display the received cropped images.

According to a second aspect of embodiments of the present disclosure, an imaging method which is applied in an imaging system is provided. The imaging system includes an image capturing unit, an image processor and an image display, and there is an offset between a center of an image sensor in the image capturing unit and an optical axis of an imaging lens module in the image capturing unit. The method includes: capturing images by the image capturing unit; by the image processor, determining position information of cropped images, corresponding to different scene modes, on the image sensor and cropping the image captured through the image capturing unit based on the position information to obtain the cropped images corresponding to the different scene modes, wherein at least two scene modes are supported by the imaging system, the position information of the cropped images, corresponding to the different scene modes, on the image sensor is not exactly the same; based on a scene mode, transmitting a corresponding cropped image to the image display corresponding to the scene mode by the image processor; and displaying the received cropped images by the image display.

The imaging system provided by embodiments of the present disclosure includes the image capturing unit, the image processor and the image display, and there is an offset between a center of an image sensor in the image capturing unit and an optical axis of an imaging lens module in the image capturing unit. The image capturing unit is configured to capture an image; the image processor is configured to determine position information of cropped images, corresponding to different scene modes, on the image sensor and crop the image captured through the image capturing unit based on the position information to obtain the cropped images corresponding to the different scene modes, wherein at least two scene modes are supported by the imaging system, the position information of the cropped images, corresponding to the different scene modes, on the image sensor is not exactly the same, and the image processor is further configured to, based on a scene mode, transmit a corresponding cropped image to an image display corresponding to the scene mode; and the image display, configured to display the received cropped images. In this way, obtaining images corresponding to multiple different application scenes based on the image captured by one image capturing unit is realized, the installation difficulty of the image capturing unit is reduced, and the usage cost of the image capturing unit is reduced.

### BRIEF DESCRIPTION OF THE DRAWINGS

FIG. 1 is a schematic structural diagram illustrating an imaging system according to an exemplary embodiment of the present disclosure.
FIG. 2A is a schematic diagram illustrating an image plane of an image sensor without an offset relative to an imaging lens module, and FIGS. 2B to 2D are schematic diagrams illustrating an image plane of an image sensor with an offset according to an exemplary embodiment of the present disclosure.
FIG. 3 is a schematic structural diagram illustrating an image capturing unit according to an exemplary embodiment of the present disclosure.
FIG. 4A is a schematic diagram of imaging when there is no offset between the image sensor and the imaging lens module, and FIG. 4B is a schematic diagram of offset imaging according to an exemplary embodiment of the present disclosure.
FIGS. 5A to 5D are offset field of view segmentation diagrams according to an exemplary embodiment of the present disclosure.
FIGS. 6A to 6B are schematic diagrams illustrating an implementation of an example application of a vehicle rearview camera according to an exemplary embodiment of the present disclosure.
FIG. 7 is a schematic diagram illustrating field of views of a streaming-media scene mode and a vehicle-reversing scene mode according to an exemplary embodiment of the present disclosure.
FIGS. 8A to 8C are schematic diagrams illustrating a vehicle visual angle distribution of the vehicle rearview camera according to an exemplary embodiment of the present disclosure.
FIG. 9 is a flowchart illustrating an imaging method according to an exemplary embodiment of the present disclosure.
FIG. 10 is a flowchart illustrating determining position information of cropped images, corresponding to different scene modes, on the image sensor by an image processor according to an exemplary embodiment of the present disclosure.
FIG. 11 is a flowchart illustrating determining position information of cropped images, corresponding to different scene modes, on the image sensor by an image processor according to another exemplary embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. The embodiments described in the following exemplary embodiments do not represent all embodiments consistent with the present disclosure. Rather, they are merely examples of apparatuses and methods consistent with some aspects of the present disclosure as detailed in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise.

In order to enable those skilled in the art to better understand the technical solutions in the embodiments of the present disclosure, and to make the above objects, features and advantages of the embodiments of the present disclosure more obvious and understandable, the technical solutions in the embodiments of the present disclosure are described in further detail below in conjunction with the accompanying drawings.

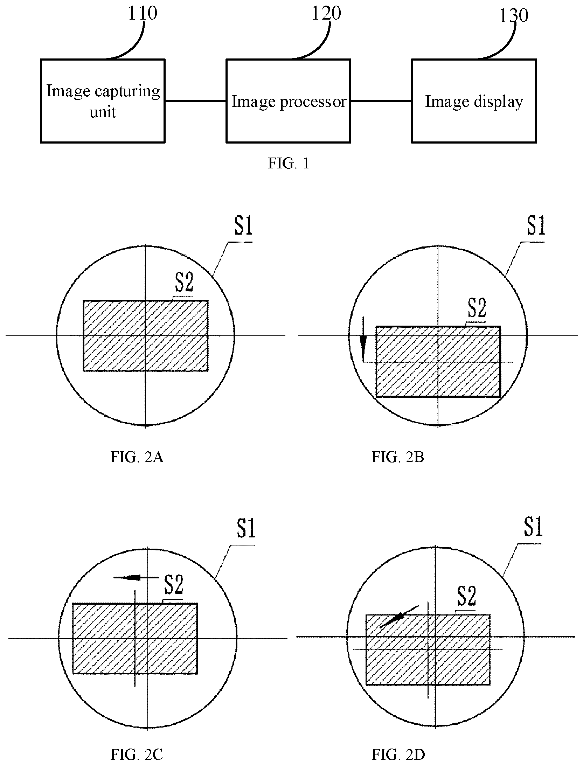

FIG. 1 is a schematic structural diagram illustrating an imaging system provided by embodiments of the present disclosure. Referring to FIG. 1, the imaging system includes an image capturing unit 110, an image processor 120, and an image display 130.

Illustratively, in embodiments of the present disclosure, in order to adapt to the imaging needs of different scenes, a center of an image sensor in the image capturing unit 110 is not co-axial with an optical axis of an imaging lens module in the image capturing unit 110, and there is an offset in a horizontal and/or a vertical direction (i.e., there is an offset), i.e., an image plane of the image sensor is offset relative to the imaging lens module, and an offset optical path system is formed, as shown in FIGS. 2B to 2D.

It will be noted that, in embodiments of the present disclosure, the image plane of the image sensor and a plane in which the imaging lens module is located are parallel to each other. There is the offset in the horizontal and/or vertical direction of the center of the image sensor relative to the optical axis of the imaging lens module, when the image plane of the image sensor and the plane in which the imaging lens module is located are perpendicular to the horizontal plane, and the image plane of the image sensor with the offset still remains parallel to the plane in which the imaging lens module is located, this is not limited by the present disclosure.

A schematic diagram illustrating the image plane of the image sensor without an offset relative to the imaging lens module is shown in FIG. 2A. Schematic diagrams of the image plane of the image sensor with the vertical offset, the horizontal offset, and the vertical and horizontal offset relative to the imaging lens module are shown in FIGS. 2B, 2C, and 2D, respectively. Where S1 represents a maximum imaging range of the imaging lens module, and S2 represents a size range of the image plane of the image sensor.

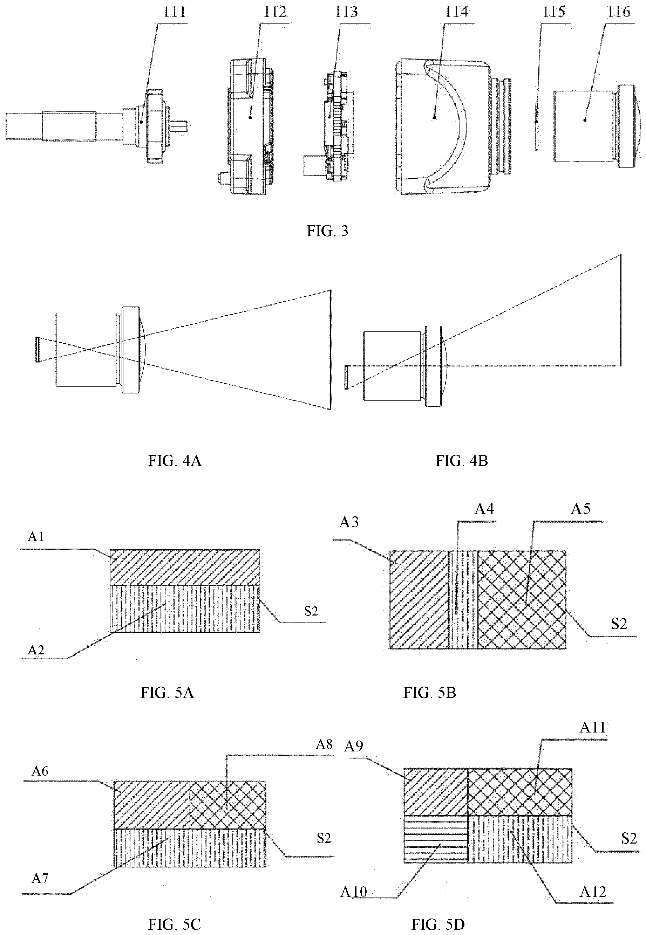

Referring to FIG. 3, in an example, the image capturing unit 110 is a vehicle camera which may include components such as a camera signal connection line 111, a camera structure base housing 112, a driver circuit board 113, a camera structure upper housing 114, an image sensor 115, and an imaging lens module 116.

Illustratively, the imaging lens module 116 includes an optical lens, a spacer, a lens barrel, a pressure cap, a shading sheet, an infrared cutoff filter, etc. for imaging, so as to scale up or down the actual scene to form a clear image on the image sensor 115.

The image sensor 115 is a complementary metal oxide semiconductor (CMOS) or a chargecoupled device (CCD) including a series of pixel arrays, so as to implement photoelectric conversion of an optical image signal captured by the imaging lens module 116 to form an image and a video stream for transmission.

The driver circuit board 113 is configured to provide drive for the circuit devices.

The camera structure base housing 112 and the camera structure upper housing 114 are configured to provide support and fixation of the components, and dust and water resistance functions.

The camera signal connection line 111 is configured to couple to a body circuit to provide power input and signal transmission for the camera.

In embodiments of the present disclosure, since the image plane of the image sensor is offset relative to the imaging lens module, the field of view of the image capturing unit 110 is asymmetrical.

When the image plane of the image sensor has a horizontal offset relative to the imaging lens module, the horizontal field of view of the image capturing unit 110 is no longer symmetrical with respect to the first designated plane. When the image plane of the image sensor has a vertical offset relative to the imaging lens module, the vertical field of view of the image capturing unit 110 is no longer symmetrical with respect to the second designated plane.

When the image plane of the image sensor is perpendicular to the horizontal plane, the first designated plane is a plane where the optical axis is located and the plane is perpendicular to the horizontal plane; and the second designated plane is the horizontal plane where the optical axis is located. Illustratively, the field of view of the image capturing unit 110 is an angle formed by the two edges of the maximum range of an object image of a target to be measured that can pass through the lens, with the imaging lens module as the vertex. The field of view may include a horizontal field of view, a vertical field of view, and a diagonal field of view according to directions. In an embodiment, when the image plane of the image sensor is not perpendicular to the horizontal plane, the first designated plane is a plane that passes through the optical axis and bisects the imaging lens module vertically (i.e., into left and right parts), and the second designated plane is a plane that passes through the optical axis and bisects the imaging lens module horizontally (i.e., into upper and lower parts).

For example, if the image plane of the image sensor has a vertical downward offset with respect to the imaging lens module, the field of view of the upper portion will be larger than the field of view of the lower portion with the optical axis of the imaging lens module as a reference, and the more the image plane of the image sensor is offset downward with respect to the imaging lens module, the larger the deviation of the field of view of the upper portion from the field of view of the lower portion, as shown in FIG. 4B. The imaging situation without an offset is shown in FIG. 4A.

Based on the above offset optical path system, the image plane of the image sensor can be segmented into different regions to achieve image acquisition in different field of view ranges and match the needs of different application scenes. Since the offset field of view will have a distortion and asymmetry, for the scene requirements where the observation range needs to be centered, the image in the centered display region can be cropped from the image plane of the image sensor to ensure the effect of the image. For a scene where the observation angle does not require symmetry and is not sensitive to the distortion, the image can be cropped from the image plane of the image sensor in the offset display region to reduce invalid information and increase the field of view in the direction of the scene focus.

Illustratively, the segmentation of the image plane of the image sensor may include segmentation into different regions in the horizontal direction, segmentation into different regions in the vertical direction, and segmentation into different regions in the horizontal and vertical directions. The number of the segmented regions may be two or more to adapt to the needs of different display scenes, as shown in FIGS. 5A to 5D.

FIG. 5A is a schematic diagram illustrating the image plane of the image sensor segmented into two regions (A1 and A2) in the vertical direction. FIG. 5B is a schematic diagram illustrating the image plane of the image sensor segmented into three regions (A3, A4 and A5) in the horizontal direction. FIGS. 5C to 5D are schematic diagrams illustrating the image plane of the image sensor segmented into multiple regions (A6 to A8 and A9 to A12) in the horizontal and vertical directions.

When the image plane of the image sensor is segmented, the segmentation regions corresponding to different scene modes may overlap.

Illustratively, the image capturing unit 110 is a vehicle rearview camera, it is considered that the main uses of the vehicle rearview camera include obtaining the road and vehicle conditions behind the vehicle while the vehicle is running (which may be referred to as a streaming-media scene) and, when reversing, determining whether there are obstacles, etc. behind the vehicle (usually a parking space) (which may be referred to as a vehicle-reversing scene). For the streaming-media scene, the image directly behind the vehicle is usually necessary to be displayed. For the vehicle-reversing scene, the image on the lower side of the rear of the vehicle is usually necessary to be displayed, and the image on the upper side of the rear of the vehicle is less concerned. Therefore, by allowing the image sensor in the vehicle rearview camera to have a vertical offset relative to the imaging lens module (the specific offset position can be set according to actual needs), the field of view of the vehicle rearview camera above the horizontal plane where the optical axis is located can be reduced, the field of view of the vehicle rearview camera below the horizontal plane where the optical axis is located can be increased. Thereby, for the image captured by the vehicle rearview camera, the image directly behind the vehicle can be cropped for the streaming-media scene, and the image on the lower side of the rear of the vehicle can be cropped for the vehicle-reversing scene.

In embodiments of the present disclosure, based on the above offset optical path system, in order to adapt to the display needs of different scene modes, for the original image captured by the image capturing unit 110, the image can be cropped based on a scene mode to be displayed to obtain the image to be displayed in the scene mode (the image to be displayed obtained by cropping is referred to as the cropped image herein). Accordingly, the image processor 120 can determine the position information of the cropped image, corresponding to the different scene modes, on the image sensor and crop the image captured by the image capturing unit based on the position information to obtain the cropped images corresponding to the different scene modes.

In an example, the position information of the cropped images, corresponding to the different scene modes, on the image sensor may be preconfigured in the imaging system.

For example, the position information of the cropped images, corresponding to the different scene modes, on the image plane of the image sensor can be determined based on the information of the mounting position of the image capturing unit 110 (e.g., a vehicle camera) on the vehicle, the offset position relationship of the image plane of the image capturing unit 110 relative to the imaging lens module, and the image display needs in the different scene modes.

It will be noted that the position information of the cropped image on the image sensor described in embodiments of the present disclosure refers to the position information of the cropped image on the image plane of the image sensor, for example, coordinate information in a coordinate system with the upper left vertex of the image plane of the image sensor as the coordinate origin, horizontal to the right as the positive direction of the horizontal coordinate axis, and vertical to the right as the positive direction of the vertical coordinate axis.

In an example, at least two scene modes may be supported by the imaging system, and the position information of the cropped images, corresponding to the different scene modes, on the image sensor is not exactly the same.

In an embodiment, for example, the imaging system supports two scene modes, the position information of the cropped images, corresponding to the different scene modes, on the image sensor is different.

In another embodiment, for example, the imaging system supports three scene modes, the position information of the cropped images, corresponding to the three scene modes, on the image sensor may be different from each other, or, the position information of the cropped images, corresponding to two of the three scene modes, on the image sensor may be the same, and the position information of the cropped image, corresponding to the remaining one of the three scene modes, on the image sensor is different from the position information of the cropped images corresponding to the two of the three scene modes, on the image sensor.

For example, the scene modes supported by the imaging system include scene modes 1 to 3. The position information of the cropped images, corresponding to the scene modes 1 and 2, on the image sensor is the same, and position information of a cropped image, corresponding to the scene mode 3, on the image sensor is different from position information of a cropped images, corresponding to the scene modes 1 and 2, on the image sensor.

In embodiments of the present disclosure, when the image processor 120 obtains cropped images corresponding to different scene modes, based on a scene mode the obtained cropped image can be transmitted to an image display 130 corresponding to the scene mode, and the image display 130 displays the received cropped image.

In an example, the image displays 130 corresponding to the different scene modes may be different; or, the cropped images of the different scene modes may be displayed by the same image display 130 by scene mode switching.

Illustratively, the imaging system includes scene modes 1 and 2, and the imaging system includes image displays 1 and 2, with the image display 1 corresponding to the scene mode 1 and the image display 2 corresponding to the scene mode 2. The image processor may send a cropped image corresponding to the scene mode 1 to the image display 1 for display, and send a cropped image corresponding to the scene mode 2 to the image display 2 for display.

Illustratively, the imaging system includes scene modes 1 and 2, and the imaging system includes an image display, the image processor may send a cropped image corresponding to the scene mode 1 to the image display 1 switched to the scene mode 1 for display, and send a cropped image corresponding to the scene mode 2 to the image display 1 switched to the scene mode 2 for display.

In an example, the imaging system includes an image display corresponding to multiple different scene modes, when sending a cropped image to the image display, the scene mode corresponding to the current cropped image is necessary to be indicated to cause the image display to switch to the scene mode and to display the received cropped image.

It will be noted that, in embodiments of the present disclosure, when a plurality of image displays are included in the imaging system, some or all of the plurality of image displays may support display for the plurality of cropped images corresponding to different scene modes.

For example, the imaging system supports scene modes 1 to 3, and the imaging system includes image displays 1 and 2. The image display 1 can be used to display a cropped image corresponding to the scene mode 1, and a cropped image corresponding to the scene mode 2, respectively, by scene mode switching. The image display 2 is used to display a cropped image corresponding to the scene mode 3.

For example, the imaging system supports scene modes 1 to 4 and the imaging system includes image displays 1 and 2. The image display 1 can be used to display a cropped image corresponding to the scene mode 1 and a cropped image corresponding to the scene mode 2, respectively, by scene mode switching. The image display 2 can be used to display a cropped image corresponding to the scene mode 3 and a cropped image corresponding to the scene mode 4, respectively, by scene mode switching.

In an example, based on a scene mode carried in a received image display instruction, the image processor 120 may acquire a cropped image in the scene mode and display the cropped image through the corresponding image display 130, i.e., the scene mode to display the image may be notified to the image processor 120 through the image display instruction.

As a possible embodiment, the image processor 120 determines the position information of cropped images, corresponding to the different scene modes, on the image sensor, by: for any one of the different scene modes, determining a field of view of a cropped image corresponding to the scene mode; determining a size of the cropped image corresponding to the scene mode based on the field of view; determining a position of a center of the cropped image, corresponding to the scene mode, on the image sensor based on the field of view and an offset position between the center of the image sensor and the optical axis of the imaging lens module; and determining position information of the cropped image on the image sensor based on the size of the cropped image corresponding to the scene mode and the position of the center of the cropped image on the image sensor.

In order to obtain images displayed in different scene modes, for any one of the different scene modes, on the one hand, the image processor 120 may determine a field of view of a cropped image corresponding to the scene mode, and determine a size of the cropped image corresponding to the scene mode based on the field of view.

Illustratively, the field of views (including a horizontal field of view and a vertical field of view) of the cropped images corresponding to the different scene modes may be pre-stored in the image processor 120. After the image processor 120 acquires the field of view of the cropped image, the size of the cropped image can be determined based on a ratio of the field of view of the cropped image to the field of view of the image capturing unit 110, and the size of the captured original image.

For example, the horizontal field of view of the image capturing unit 110 is 120° and the horizontal field of view of the cropped image is 60°, i.e., the ratio of the horizontal field of view of the cropped image to the horizontal field of view of the image capturing unit 110 is 1:2, a width of the cropped image is 1/2 of a width of the captured original image.

Similarly, the vertical field of view of the image capturing unit 110 is 60° and the vertical field of view of the cropped image is 40°, i.e., the ratio of the vertical field of view of the cropped image to the vertical field of view of the image capturing unit 110 is 2:3, a height of the cropped image is 2/3 of a height of the captured original image.

For example, the width and height of the captured original image are W and H, respectively, the width and height of the cropped image are W^{∗}1/2 and H^{∗}2/3, respectively.

On the other hand, the image processor 120 may determine the position of the center of the cropped image, corresponding to the scene mode, on the image sensor based on the field of view and the offset position between the center of the image sensor and the optical axis of the imaging lens module.

Illustratively, the offset position between the center of the image sensor and the optical axis of the imaging lens module may be pre-stored in the image processor 120. After the image processor acquires the offset position, angles corresponding to offsetting a pixel in the horizontal direction and the vertical direction may be determined, respectively.

For example, without offset, the vertical field of view of the image capturing unit 110 is between -A° and +A°, and after the center of the image sensor is vertically offset by N pixels relative to the optical axis of the imaging lens module, the vertical field of view of the image capturing unit 110 is between -B° and +C° (A, B, and C are all non-negative numbers, and B+C=2A), the angle corresponding to offsetting a pixel in the vertical direction is |C°-B°|/N.

If a vertical field of view of a scene mode is between -D° and +E° (D and E are non-negative and D≤B and E≤C), pixel(s) by which a center of a cropped image corresponding to the scene mode is vertically offset relative to the center of the image sensor is: ((E°-D°)-(C°-B°))^{∗}N/|C°-B°|, which is positive, the offset is downward, or, which is negative, the offset is upward. Similarly, if the center of the image sensor has a horizontal offset relative to the optical axis of the imaging lens module, pixel(s) by which the center of the cropped image corresponding to the scene mode is horizontally offset relative to the center of the image sensor can be determined.

Therefore, the position of the center of the cropped image on the image sensor can be determined.

When the size of the cropped image corresponding to the scene mode and the position of the center of the cropped image on the image sensor are determined, the position information of the cropped image on the image sensor can be determined.

For example, the size of the cropped image is a^{∗}b, and the coordinates of the center of the cropped image are (c, d) with c≥a/2 and d≥b/2, the coordinates of the upper left vertex of the cropped image are (c-a/2, d-b/2), the coordinates of the lower right vertex are (c+a/2, d+b/2), the coordinates of the lower left vertex are (c+a/2, d+b/2), and the coordinates of the upper right vertex are (c+a /2, d-b/2).

As another possible embodiment, the image processor 120 determines the position information of the cropped images, corresponding to the different scene modes, on the image senso by: for any one of the different scene modes, querying a pre-configured mapping table based on the scene mode to determine position information of a cropped image, corresponding to the scene mode, on the image sensor, where the pre-configured mapping table records a correspondence between the scene mode and the position information of the cropped image on the image sensor.

Illustratively, in order to improve the efficiency of determining the position information of the cropped images, corresponding to the different scene modes, on the image sensor, the position information of the cropped images, corresponding to the different scene modes, on the image sensor can be preconfigured (for example, the position can be set based on experimental results or experience) and stored in the form of a table (which can be called a mapping table), and thereby, in the subsequent process, for any one of the different scene modes, the pre-configured mapping table can be queried based on the scene mode to determine the position information of the crop image, corresponding to the scene mode, on the image sensor.

In an example, after the position information of the cropped image on the image sensor is determined, following steps are further included: determining an image region corresponding to the position information of the image captured by the image capturing unit based on the position information; and adjusting a boundary of the image region based on imaging feature information of the image region. Cropping the image captured through the image capturing unit based on the position information includes cropping the image region, the boundary of which has been adjusted.

In order to improve the imaging quality of the cropped image, for any one of the different scene modes, after the position information of the cropped image, corresponding to the scene mode, on the image sensor is determined in the manner described above, the boundary of the image region of the captured original image can be adjusted based on imaging feature information of the image region corresponding to the position information in the captured original image, so as to reduce invalid information in that image region of the captured original image or/and improve image quality of the image region of the captured original image.

In an example, the imaging feature information may include, but be not limited to, one or more of information such as a proportion of invalid information in the image region, a degree of image distortion, or a distribution of image vignetting regions.

For example, the imaging feature information is the proportion of invalid information, when the image processor determines that the proportion of invalid information in the image region corresponding to the position information of the cropped image in the captured original image exceeds a preset threshold, a distribution of the invalid information in the image region may be identified and, based on the distribution of the invalid information in the image region, the boundary of the image region of the captured original image can be adjusted.

For example, the invalid information is distributed on the left and right side parts of the image region, the left and right boundaries of that image region in the captured original image can be adjusted to be closer to the center, i.e., the left boundary of the image region is panned to the right and the right boundary of the image region is panned to the left.

For example, the imaging feature information is distribution information of image vignetting regions, and based on the distribution information of image vignetting regions, the boundary of the image region of the acquired original image can be adjusted to eliminate vignetting.

For example, the vignetting regions are distributed in the lower left and lower right corners of the image region of the captured original image, the vignetting regions of the image region may be eliminated by moving the lower boundary of the image region of the captured original image upwards, or/and, adjusting the left and right boundaries to be closer to the center. Illustratively, after the image processor 120 adjusts the boundary of the image region based on the imaging feature information of the image region corresponding to the position information in the captured original image, the image region the boundary of which is adjusted can be cropped to obtain the cropped image corresponding to the corresponding scene mode.

It will be noted that, in embodiments of the present disclosure, since a resolution of a specified image region of the captured original image changes after the boundary of the specified image region is adjusted in the manner described above, the resolution of the cropped image obtained by cropping the image region the boundary of which is adjusted also changes. Before the cropped image is displayed, the resolution of the cropped image can be processed to a resolution of the image region, the boundary of which is not adjusted, for example, the resolution of the specified image region, the boundary of which is adjusted, can be processed to the resolution of the image region, the boundary of which is not adjusted, by pulling up or interpolation.

The operation of the imaging system provided by the embodiments of the present disclosure will be described below with reference to specific examples, so that those skilled in the art can better understand the technical solutions provided by the embodiments of the present disclosure.

In the embodiment, illustrated by the example of a vehicle imaging system, in the vehicle imaging system, the image capturing unit is a vehicle rearview camera, the image processor is an image processing chip in the vehicle rearview camera, and the image display includes an in-vehicle rearview mirror and a center control screen.

The image sensor of the in-vehicle rearview camera uses a 1/2.8" chip (i.e., the diagonal length of the chip is 1/2.8 inch) with a resolution of 1920×1080; the imaging lens module uses a 2.1mm lens (i.e., the focal length of the lens is 2.1mm).

With no offset between the image plane of the image sensor and the imaging lens module, the horizontal field of view of the vehicle rearview camera is between -62.5° and +62.5°, and the vertical field of view is between -32° and +32°, i.e., the horizontal field of view of the vehicle rearview camera is equally divided by the optical axis, and the left and right sides of the optical axis each have 62.5°, and the vertical field of view of the vehicle rearview camera is equally divided by the optical axis and the upper and lower sides of the optical axis each have 32°.

The in-vehicle rearview mirror has an aspect ratio of 5:1 and the center control screen has an aspect ratio of 4:3.

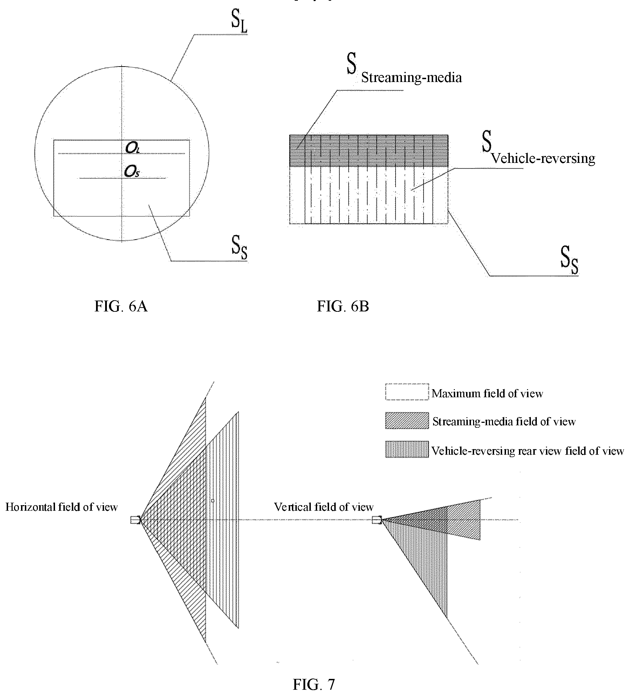

In the embodiment, the vehicle imaging system supports a streaming-media scene mode and a vehicle-reversing scene mode, and in order to adapt to the display needs of different scene modes, there is a vertical offset between the image plane of the image sensor in the vehicle rearview camera and the imaging lens module, as shown in FIG. 6A. Where O_{S} is the center of the image sensor, O_{L} is the center of the imaging lens module, S_{S} is a size range of the image sensor, and S_{L} is the maximum imaging range of the imaging lens module.

Based on the above offset, the horizontal field of view of the vehicle rearview camera is between -62.5° and +62.5°, and the vertical field of view is between +11.5° and -52.5°.

In the embodiment, the observation range needs to be centered in the streaming-media scene mode and symmetrical and the streaming-media scene mode is more sensitive to image aberrations, therefore, for the streaming-media scene mode, the position of the center of the cropped image, corresponding to the streaming-media scene mode on the image sensor can be determined based on the offset position between the image plane of the image sensor and the imaging lens module, such that the center of the cropped image corresponding to the streaming-media scene mode is co-axial with the optical axis of the imaging lens module to ensure the image quality in the streaming-media scene mode and reduce image distortion.

The observation range of the vehicle-reversing scene mode is asymmetry and is insensitive to image distortions. Therefore, for the vehicle-reversing scene mode, the field of view below the level of the optical axis of the vehicle rearview camera can be increased as much as possible to reduce the ground blind area behind the vehicle.

In addition, due to the offset between the image plane of the image sensor and the imaging lens module, the image captured by the vehicle rearview camera has vignetting (e.g., the region where the size range of the image sensor exceeds the maximum imaging range of the imaging lens module shown in FIG. 6A), therefor, when the image region corresponding to the scene mode has vignetting, it is necessary to adjust the boundary of the image region based on the vignetting to eliminate the vignetting.

Illustrated by the example of the scene shown in FIG. 6A, due to the offset between the image plane of the image sensor and the imaging lens module, the image region corresponding to the vehicle-reversing scene has vignetting (that is, the part where the rectangular region exceeds the circular region in FIG. 6A), in order to eliminate the vignetting in the image region corresponding to the vehicle-reversing scene, the left and right boundaries of the image region can be moved toward the center position to obtain the image region (S_{vehicle-reversing}) as shown in FIG. 6B..

Based on the above requirements, for the streaming-media scene mode, the image processing chip determines a horizontal field of view between -62.5° and +62.5° and a vertical field of view between -11.5° and +11.5°.

For the vehicle-reversing rear view scene, the image processing chip determines a horizontal field of view between -55° and +55° and a vertical field of view between +11.5° and -52.5°.

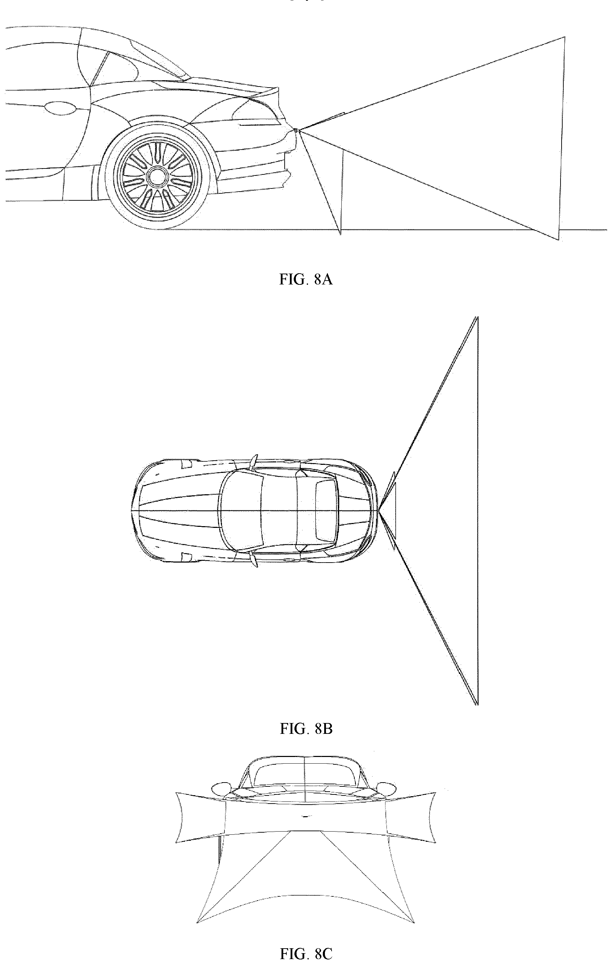

Illustrations of the field of views (including the horizontal field of view and the vertical field of view) of the streaming-media scene mode and the vehicle-reversing scene mode are shown in FIG. 7 and FIGS. 8A to 8C.

Where, FIG. 8A is a side view of a schematic view of a distribution of view angle of a vehicle; FIG. 8B is a top view of the schematic view of the distribution of view angle of the vehicle; and FIG. 8C is a rear view of the schematic view of the distribution of view angle of the vehicle.

The position information of the cropped image, corresponding to the streaming-media scene mode, on the image sensor and the position information of the cropped image, corresponding to the vehicle-reversing scene mode, on the image sensor are shown in FIG. 6B. Where the position of the cropped image, corresponding to the streaming-media scene mode, on the image sensor overlaps with the position of the cropped image, corresponding to the vehicle-reversing scene mode, on the image sensor. The resolution of the cropped image corresponding to the streaming-media scene mode is 1920×384, i.e., the image size is 1920 pixels×384 pixels; and the resolution of the cropped image corresponding to the vehicle-reversing scene mode is 1750×1080.

In the embodiment, the image processor may crop the captured image based on the position information of the cropped image on the image sensor in the scene mode to be displayed, and send the cropped image to the corresponding image display for display.

In an example, the cropped image corresponding to the streaming-media scene mode may be displayed through the in-vehicle rearview mirror, and the cropped image corresponding to the vehicle-reversing scene mode may be displayed through the center control screen.

Illustratively, when the vehicle is driving normally, the vehicle imaging system can be triggered to obtain the cropped image corresponding to the streaming-media scene mode.

For example, an image display instruction for the cropped image of the streaming-media scene mode is sent to the image processing chip in the vehicle rearview camera, and the image display instruction carries identification information of the streaming-media scene mode; the image processing chip receives the image display instruction and determines that the current operating scene mode is the streaming-media scene mode, the image processing chip can determine the cropped image, corresponding to the streaming-media scene mode, on the image sensor, and based on the position information, the image captured by the vehicle rearview camera is cropped to obtain the cropped image corresponding to the streaming-media scene mode, and then, the cropped image corresponding to the streaming-media scene mode is transmitted to the in-vehicle rearview mirror, and the received cropped image is displayed by the in-vehicle rearview mirror.

When the vehicle is reversing, the vehicle imaging system can be triggered to obtain the cropped image corresponding to the vehicle-reversing scene mode.

For example, an image display instruction for the cropped image of the vehicle-reversing scene mode is sent to the image processing chip in the vehicle rearview camera, and the image display instruction carries identification information of the vehicle-reversing scene mode; the image processing chip receives the image display instruction and determines that the current operating scene mode is the vehicle-reversing scene mode, the image processing chip can determine the cropped image, corresponding to the vehicle-reversing scene mode, on the image sensor, and based on the position information, the image captured by the vehicle rearview camera is cropped to obtain the cropped image corresponding to the vehicle-reversing scene mode, and then, the cropped image corresponding to the vehicle-reversing scene mode is transmitted to the center control screen, and the received cropped image is displayed by the center control screen.

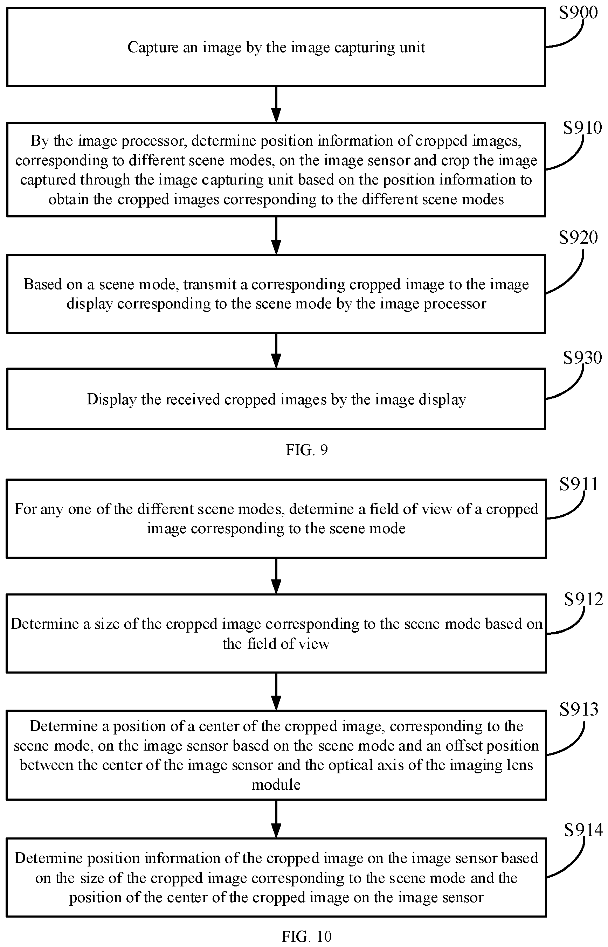

a flowchart illustrating an imaging method according to an exemplary embodiment of the present disclosure, as shown in FIG. 9, the imaging method may include the following steps.

At step S900, an image is captured by the image capturing unit.

In an embodiment, illustrated by an example of a vehicle imaging system, the image capturing unit is the vehicle rearview camera, the image processor is the image processing chip in the vehicle rearview camera, and the image display includes the vehicle rearview mirror and the center control screen. When the vehicle is running, the vehicle rearview camera takes an image or a video from the rear of the vehicle. At step S910, by the image processor, position information of cropped images, corresponding to different scene modes, on the image sensor is determined and the image captured through the image capturing unit is cropped based on the position information to obtain the cropped images corresponding to the different scene modes.

During the vehicle driving, the road and vehicle conditions behind the vehicle are obtained, which may be referred to as a streaming-media scene, and when reversing, determining whether there are obstacles, etc. behind the vehicle (usually a parking space) which may be referred to as a vehicle-reversing scene.

In an embodiment, the position information of the cropped images, corresponding to different scene modes, on the image sensor may be pre-configured in the imaging system in the form of a mapping table. When the vehicle is driving normally, the image processing chip in the vehicle rearview camera can determine the position information of the cropped image, corresponding to the streaming-media scene, on the image sensor through the pre-configured mapping table, and crop the image captured by the vehicle rearview camera based on the position information to obtain the cropped image corresponding to the streaming-media scene. When reversing, the image processing chip in the vehicle rearview camera can determine the position information of the cropped image, corresponding to the vehicle-reversing scene, on the image sensor through the pre-configured mapping table and crop the image captured by the vehicle rearview camera based on the position information to obtain the cropped image corresponding to the vehicle-reversing scene.

In an embodiment, when the vehicle is driving normally, the image processing chip in the vehicle rearview camera can determine a field of view of the cropped image corresponding to the streaming-media scene, determine a size of the cropped image corresponding to the streaming-media scene based on that field of view, determine a position of a center of the cropped image, corresponding to the streaming-media scene mode, on the image sensor based on the field of view and an offset position between the center of the image sensor and the optical axis of the imaging lens module, and then determine the position information of the cropped image corresponding to the streaming-media scene on the image sensor based on the size of the cropped image corresponding to the streaming-media scene and the position of the center of the cropped image on the image sensor.

In an embodiment, when the vehicle is reversing, the image processing chip in the vehicle rearview camera can determine a field of view of the cropped image corresponding to the vehicle-reversing scene, determine a size of the cropped image corresponding to the vehicle-reversing scene based on that field of view, determine a position of a center of the cropped image, corresponding to the vehicle-reversing scene mode, on the image sensor based on the field of view and an offset position between the center of the image sensor and the optical axis of the imaging lens module, and then determine the position information of the cropped image corresponding to the vehicle-reversing scene on the image sensor based on the size of the cropped image corresponding to the vehicle-reversing scene and the position of the center of the cropped image on the image sensor.

At step S920, based on a scene mode, a corresponding cropped image is transmitted to the image display corresponding to the scene mode by the image processor.

In an example, the image displays corresponding to different scene modes may be different; or, the cropped images of different scene modes may be displayed by the same image display by scene mode switching.

In an example, when the vehicle is driving normally, the image processing chip in the vehicle rearview camera transmits the obtained cropped image to the in-vehicle rearview mirror based on the streaming-media scene; and when the vehicle is reversing, the image processing chip in the vehicle rearview camera transmits the obtained cropped image to the center control screen based on the vehicle-reversing scene.

Step S930, the received cropped image is displayed by the image display.

During normal driving, the in-vehicle rearview mirror displays the received image/media streaming of the road and vehicle conditions behind the vehicle; and during reversing, the center control screen displays the received image/media streaming under the rear of the vehicle.

In embodiments of the present disclosure, in order to adapt to the imaging needs of different scenes, a center of an image sensor in the image capturing unit is not co-axial with an optical axis of an imaging lens module in the image capturing unit, and there is an offset in a horizontal and/or a vertical direction, i.e., an image plane of the image sensor is offset relative to the imaging lens module, and an offset optical path system is formed.

Since the image plane of the image sensor is offset relative to the imaging lens module, the field of view of the image capturing unit is asymmetrical.

For example, if the image plane of the image sensor has a vertical downward offset with respect to the imaging lens module, the field of view of the upper portion will be larger than the field of view of the lower portion with the optical axis of the imaging lens module as a reference, and the more the image plane of the image sensor is offset downward with respect to the imaging lens module, the larger the deviation of the field of view of the upper portion from the field of view of the lower portion.

Based on the above offset optical path system, the image plane of the image sensor can be segmented into different regions to achieve image acquisition in different field of view ranges and match the needs of different application scenes. Since the offset field of view will have a distortion and asymmetry, the image in the centered display region can be cropped from the image plane of the image sensor to ensure the effect of the image for the scene requirements where the observation range needs to be centered. For a scene where the observation range does not require symmetry and is not sensitive to the aberration, the image can be cropped from the image plane of the image sensor in the offset display region to reduce invalid information and increase the field of view in the direction of the scene focus.

Illustratively, the segmentation of the image plane of the image sensor may include segmentation into different regions in the horizontal direction, segmentation into different regions in the vertical direction, and segmentation into different regions in the horizontal and vertical directions. The number of the segmented regions may be two or more to adapt to the needs of different display scenes.

In embodiments of the present disclosure, based on the above offset optical path system, in order to adapt to the display needs of different scene modes, for the original image captured by the image capturing unit, the image can be cropped based on a scene mode to be displayed to obtain the image to be displayed in the scene mode (i.e., the cropped image).

Accordingly, the image processor can determine the position information of the cropped image, corresponding to the different scene modes, on the image sensor and crop the image captured by the image capturing unit based on the position information to obtain the cropped images corresponding to the different scene modes.

The position information of the cropped images, corresponding to the different scene modes, on the image sensor may be preconfigured in the imaging system.

For example, the position information of the cropped images, corresponding to the different scene modes, on the image plane of the image sensor can be determined based on the information of the mounting position of the image capturing unit (e.g., a vehicle camera) on the vehicle, the offset position relationship of the image plane of the image capturing unit relative to the imaging lens module, and the image display needs in the different scene modes.

The position information of the cropped image on the image sensor described in embodiments of the present disclosure refers to the position information of the cropped image on the image plane of the image sensor, for example, coordinate information in a coordinate system with the upper left vertex of the image plane of the image sensor as the coordinate origin, horizontal to the right as the positive direction of the horizontal coordinate axis, and vertical to the right as the positive direction of the vertical coordinate axis.

In an example, at least two scene modes may be supported by the imaging system, and the position information of the cropped images, corresponding to the different scene modes, on the image sensor is not exactly the same.

For example, the imaging system supports two scene modes, the position information of the cropped images, corresponding to the different scene modes, on the image sensor is different from each other.

For example, the imaging system supports three scene modes, the position information of the cropped images, corresponding to the three scene modes, on the image sensor may be different from each other, or, the position information of the cropped images, corresponding to two of the three scene modes, on the image sensor may be the same, and the position information of the cropped image, corresponding to the remaining one of the three scene modes, on the image sensor is different from the position information of the cropped images corresponding to the two of the three scene modes, on the image sensor.

For example, the scene modes supported by the imaging system include scene modes 1 to 3. The position information of the cropped images, corresponding to the scene modes 1 and 2, on the image sensor is the same, and position information of a cropped image, corresponding to the scene mode 3, on the image sensor is different from position information of a cropped images, corresponding to the scene modes 1 and 2, on the image sensor.

When the image processor obtains cropped images corresponding to different scene modes, based on a scene mode the obtained cropped image can be transmitted to an image display corresponding to the scene mode, and the image display displays the received cropped image.

The image displays corresponding to the different scene modes may be different; or, the cropped images of the different scene modes may be displayed by the same image display by scene mode switching.

The imaging system includes scene modes 1 and 2, and the imaging system includes image displays 1 and 2, with the image display 1 corresponding to the scene mode 1 and the image display 2 corresponding to the scene mode 2. The image processor may send a cropped image corresponding to the scene mode 1 to the image display 1 for display, and send a cropped image corresponding to the scene mode 2 to the image display 2 for display.

The imaging system includes scene modes 1 and 2, and the imaging system includes an image display, the image processor may send a cropped image corresponding to the scene mode 1 to the image display 1 switched to the scene mode 1 for display, and send a cropped image corresponding to the scene mode 2 to the image display 1 switched to the scene mode 2 for display.

In an example, the imaging system includes an image display corresponding to multiple different scene modes, when sending a cropped image to the image display, the scene mode corresponding to the current cropped image is necessary to be indicated to cause the image display to switch to the scene mode and to display the received cropped image.

In embodiments of the present disclosure, when a plurality of image displays are included in the imaging system, some or all of the plurality of image displays may support display for the plurality of cropped images corresponding to different scene modes.

For example, the imaging system supports scene modes 1 to 3, and the imaging system includes image displays 1 and 2. The image display 1 can be used to display a cropped image corresponding to the scene mode 1, and a cropped image corresponding to the scene mode 2, respectively, by scene mode switching. The image display 2 is used to display a cropped image corresponding to the scene mode 3.

For example, the imaging system supports scene modes 1 to 4 and the imaging system includes image displays 1 and 2. The image display 1 can be used to display a cropped image corresponding to the scene mode 1 and a cropped image corresponding to the scene mode 2, respectively, by scene mode switching. The image display 2 can be used to display a cropped image corresponding to the scene mode 3 and a cropped image corresponding to the scene mode 4, respectively, by scene mode switching.

As a possible embodiment, as shown in FIG. 10, in step S910, the image processor determines the position information of cropped images, corresponding to the different scene modes, on the image sensor by the following step.

At step S911, for any one of the different scene modes, the field of view of the cropped image corresponding to the scene mode is determined.

In an example, for the streaming-media scene, the image processing chip in the vehicle rearview camera determines the horizontal field of view of the cropped image to be between -62.5° and +62.5° and the vertical field of view to be between -11.5° and +11.5°. For the vehicle-reversing scene, the image processing chip in the vehicle rearview camera determines the horizontal field of view of the cropped image to be between -55° and +55° and the vertical field of view to be between +11.5° and -52.5°.

At step S912, based on the field of view, a size of the cropped image corresponding to the scene mode is determined.

In an example, the horizontal field of view of the vehicle rearview camera is between -62.5° and +62.5° and the vertical field of view is between +11.5° and -52.5°. Thus, for the streaming-media scene, the width of the cropped image is that of the captured original image and the height of the cropped image is 23/64 of the height of the captured original image; for the vehicle-reversing scene, the width of the cropped image is 0.88 times the width of the original image and the height is that of the captured original image.

At step S913, a position of a center of the cropped image, corresponding to the scene mode, on the image sensor is determined based on the field of view and an offset position between the center of the image sensor and the optical axis of the imaging lens module.

With no offset between the image plane of the image sensor and the imaging lens module, the horizontal field of view of the vehicle rearview camera is between -62.5° and +62.5°, and the vertical field of view is between -32° and +32°. After offsetting, the horizontal field of view of the vehicle rearview camera is between -62.5° and +62.5° and the vertical field of view is between +11.5° and -52.5°.

If the center of the image sensor is horizontally offset by 20 pixels relative to the optical axis of the imaging lens module, the horizontal field of view of the vehicle rearview camera is between -63.5° and +61.5°, and the angle corresponding to a pixel offset in the horizontal direction is 0.1. If the center of the image sensor is vertically offset by 10 pixels relative to the optical axis of the imaging lens module, the vertical field of view of the vehicle rearview camera is between -33° and +31°, and the angle corresponding to a pixel offset in the vertical direction is 0.2.

For the streaming-media scene, the horizontal field of view of the cropped image determined by the image processing chip in the vehicle rearview camera is between -62.5° and +62.5°, and the vertical field of view is between -11.5° and +11.5°. The center of the cropped image corresponding to the streaming-media scene is vertically offset by 10 pixels relative to the center of the image sensor, and the center of the cropped image corresponding to the streaming-media scene is horizontally offset by 0 pixels relative to the center of the image sensor.

For the vehicle-reversing scene, the horizontal field of view of the cropped image determined by the image processing chip in the vehicle rearview camera is between -55° and +55°, and the vertical field of view is between +11.5° and -52.5°. The center of the cropped image corresponding to the vehicle-reversing scene is vertically offset by 205 pixels relative to the center of the image sensor, and the center of the cropped image corresponding to the vehicle-reversing scene is horizontally offset by 0 pixels relative to the center of the image sensor.

At step S914, the position information of the cropped image on the image sensor is determined based on the size of the cropped image corresponding to the scene mode and the position of the center of the cropped image on the image sensor.

If the image plane of the image sensor has a size of 1920 × 1080, and the upper left vertex of the image plane of the image sensor is the coordinate origin, horizontal to the right is the positive direction of the horizontal axis, vertical to the right is the positive direction of the vertical axis, and the coordinates of the center of the image sensor are (960, 540).

For the streaming-media scene, the coordinates of the center of the corresponding cropped image are (960, 550). If the size of the cropped image is 1920 × 384, the coordinates of the top left vertex of the cropped image are (0, 358), the coordinates of the lower right vertex are (1920, 742), and the coordinates of the lower left vertex are (0, 742) and the coordinates of the top right vertex are (1920, 358).

For the vehicle-reversing scene, the coordinates of the center of the corresponding cropped image are (960, 745). If the size of the cropped image is 1750 × 1080, the coordinates of the top left vertex of the cropped image are (85, 205) and the coordinates of the lower right vertex are (1835, 1285).

In order to obtain images displayed in different scene modes, for any one of the different scene modes, on the one hand, the image processor may determine a field of view of a cropped image corresponding to the scene mode, and determine a size of the cropped image corresponding to the scene mode based on the field of view.

Illustratively, the field of views (including a horizontal field of view and a vertical field of view) of the cropped images corresponding to the different scene modes may be pre-stored in the image processor 120. After the image processor 120 obtains the field of view of the cropped image, the size of the cropped image can be determined based on a ratio of the field of view of the cropped image to the field of view of the image capturing unit 110, and the size of the captured original image.

On the other hand, the image processor may determine the position of the center of the cropped image, corresponding to the scene mode, on the image sensor based on the field of view and the offset position between the center of the image sensor and the optical axis of the imaging lens module.

Illustratively, the offset position between the center of the image sensor and the optical axis of the imaging lens module may be pre-stored in the image processor 120. After the image processor acquires the offset position, angles corresponding to offsetting a pixel in the horizontal direction and the vertical direction may be determined, respectively.

Therefore, the position of the center of the cropped image on the image sensor can be determined.

When the size of the cropped image corresponding to the scene mode and the position of the center of the cropped image on the image sensor are determined, the position information of the cropped image on the image sensor can be determined.

Illustratively, the size of the cropped image is a^{∗}b, and the coordinates of the center of the cropped image are (c, d) with c≥a/2 and d≥b/2, the coordinates of the upper left vertex of the cropped image are (c-a/2, d-b/2), the coordinates of the lower right vertex are (c+a/2, d+b/2), the coordinates of the lower left vertex are (c+a/2, d+b/2), and the coordinates of the upper right vertex are (c+a /2, d-b/2).

As another possible embodiment, in step S910, the image processor determines the position information of the cropped images, corresponding to the different scene modes, on the image senso by:
for any one of the different scene modes, querying a pre-configured mapping table based on the scene mode to determine position information of a cropped image, corresponding to the scene mode, on the image sensor, where the pre-configured mapping table records a correspondence between the scene mode and the position information of the cropped image on the image sensor.

Illustratively, in order to improve the efficiency of determining the position information of the cropped images, corresponding to the different scene modes, on the image sensor, the position information of the cropped images, corresponding to the different scene modes, on the image sensor can be preconfigured (for example, the position can be set based on experimental results or experience) and stored in the form of a table (which can be called a mapping table), and thereby, in the subsequent process, for any one of the different scene modes, the pre-configured mapping table can be queried based on the scene mode to determine the position information of the crop image, corresponding to the scene mode, on the image sensor.

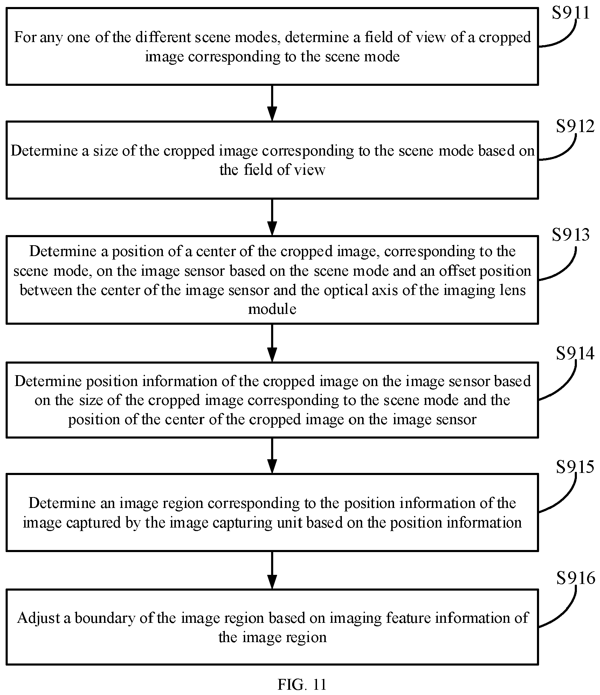

In an example, as shown in FIG. 11, in step S914, after the position information of the cropped image on the image sensor is determined, the following steps are included.

At step S915, an image region corresponding to the position information of the image captured by the image capturing unit is determined based on the position information is further included.

In an example, for the streaming-media scene, the image region corresponding to the quadrilateral with the four points (0, 358), (0, 742), (1920, 358), and (1920, 742) as vertices in the image captured by the vehicle rearview camera is determined. For the vehicle-reversing scene, the image region corresponding to the quadrilateral with the four points (85, 205), (85, 1285), (1835, 205), and (1835, 1285) as vertices in the image captured by the vehicle rearview camera is determined.

At step S916, a boundary of the image region is adjusted based on imaging feature information of the image region.

In an example, the imaging feature information may include, but be not limited to, one or more of information such as a proportion of invalid information in the image region, a degree of image distortion, or a distribution of image vignetting regions.

In an example, when the image processing chip in the vehicle rearview camera determines that the proportion of invalid information in the image region corresponding to the position information of the cropped image in the captured original image exceeds a preset threshold, a distribution of the invalid information in may be identified. If the invalid information is distributed on the left and right side parts of the image region, the left and right boundaries of that image region in the captured original image can be adjusted to be closer to the center, i.e., the left boundary of the image region is panned to the right and the right boundary of the image region is panned to the left.

In an example, the image processing chip in the vehicle rearview camera determines that the vignetting regions in the image region corresponding to the position information of the cropped image in the captured original image are distributed in the lower left and lower right corners of the image region, the vignetting regions of the image region may be eliminated by moving the lower boundary of the image region of the captured original image upwards, or/and, adjusting the left and right boundaries to be closer to the center.

At step S910, cropping the image captured through the image capturing unit based on the position information includes:
cropping the image region, the boundary of which has been adjusted.

Illustratively, in order to improve the imaging quality of the cropped image, for any one of the different scene modes, after the position information of the cropped image, corresponding to the scene mode, on the image sensor is determined in the manner described above, the boundary of the image region of the captured original image can be adjusted based on imaging feature information of the image region corresponding to the position information in the captured original image, so as to reduce invalid information in that image region of the captured original image or/and improve image quality of the image region of the captured original image.

In an example, the imaging feature information may include, but be not limited to, one or more of information such as a proportion of invalid information in the image region, a degree of image distortion, or a distribution of image vignetting regions.

For example, the imaging feature information is the proportion of invalid information, when the image processor determines that the proportion of invalid information in the image region corresponding to the position information of the cropped image in the captured original image exceeds a preset threshold, a distribution of the invalid information in the image region may be identified and, based on the distribution of the invalid information in the image region, the boundary of the image region of the captured original image can be adjusted.

For example, the invalid information is distributed on the left and right side parts of the image region, the left and right boundaries of that image region in the captured original image can be adjusted to be closer to the center.

For example, the imaging feature information is distribution information of image vignetting regions, and based on the distribution information of image vignetting regions, the boundary of the image region of the acquired original image can be adjusted to eliminate vignetting.

For example, the vignetting regions are distributed in the lower left and lower right corners of the image region of the captured original image, the vignetting regions of the image region may be eliminated by moving the lower boundary of the image region of the captured original image upwards, or/and, adjusting the left and right boundaries to be closer to the center.

Illustratively, after the image processor adjusts the boundary of the image region based on the imaging feature information of the image region corresponding to the position information in the captured original image, the image region the boundary of which is adjusted can be cropped to obtain the cropped image corresponding to the corresponding scene mode.

It will be noted that, in embodiments of the present disclosure, since a resolution of a specified image region of the captured original image changes after the boundary of the specified image region is adjusted in the manner described above, the resolution of the cropped image obtained by cropping the image region the boundary of which is adjusted also changes. Before the cropped image is displayed, the resolution of the cropped image can be processed to a resolution of the image region, the boundary of which is not adjusted, for example, the resolution of the specified image region, the boundary of which is adjusted, can be processed to the resolution of the image region, the boundary of which is not adjusted, by pulling up or interpolation.

It will be noted that the relational terms such as "first" and "second" used herein are merely intended to distinguish one entity or operation from another entity or operation rather than to require or imply any such actual relation or order existing between these entities or operations. Further, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above description is only preferred examples of the present disclosure, and is not intended to limit the disclosure, and any modifications, equivalents, improvements, etc., which are made within the spirit and principles of the present disclosure, should be included scope of the present disclosure.

## Claims

1. An imaging system, comprising:
an image capturing unit, configured to capture an image, wherein there is an offset between a center of an image sensor in the image capturing unit and an optical axis of an imaging lens module in the image capturing unit;
an image processor, configured to determine position information of cropped images, corresponding to different scene modes, on the image sensor and crop the image captured through the image capturing unit based on the position information to obtain the cropped images corresponding to the different scene modes, wherein at least two scene modes are supported by the imaging system, the position information of the cropped images, corresponding to the different scene modes, on the image sensor is not exactly same, and the image processor is further configured to, based on a scene mode, transmit a corresponding cropped image to an image display corresponding to the scene mode; and
the image display, configured to display the received cropped images.

2. The imaging system of claim 1, wherein the image processor is configured to determine the position information of the cropped images, corresponding to the different scene modes, on the image sensor by:
for any one of the different scene modes,
determining a field of view of a cropped image corresponding to the scene mode;
determining a size of the cropped image corresponding to the scene mode based on the field of view;
determining a position of a center of the cropped image, corresponding to the scene mode, on the image sensor based on the field of view and an offset position between the center of the image sensor and the optical axis of the imaging lens module; and
determining position information of the cropped image on the image sensor based on the size of the cropped image corresponding to the scene mode and the position of the center of the cropped image on the image sensor.

3. The imaging system of claim 1, wherein the image processor is configured to determine the position information of the cropped images, corresponding to the different scene modes, on the image sensor by:
for any one of the different scene modes, querying a pre-configured mapping table based on the scene mode to determine position information of a cropped image, corresponding to the scene mode, on the image sensor,
wherein the pre-configured mapping table records a correspondence between the scene mode and the position information of the cropped image on the image sensor.

4. The imaging system of any one of claims 1 to 3, wherein after determining the position information of the cropped images, corresponding to the different scene modes, on the image sensor, the image processor is further configured to perform operations comprising:
determining an image region corresponding to the position information of the image captured by the image capturing unit based on the position information; and
adjusting a boundary of the image region based on imaging feature information of the image region;
wherein the image processor is configured to crop the image captured through the image capturing unit based on the position information by:
cropping the image region, the boundary of which has been adjusted.

5. The imaging system of claim 4, wherein the imaging feature information of the image region comprises at least one of:
a proportion of invalid information in the image region,
a degree of image distortion, or
a distribution of image vignetting regions.

6. The imaging system of claim 4, wherein the image processor is further configured to process a resolution of the cropped image to a resolution of the image region, the boundary of which is not adjusted.

7. The imaging system of any one of claims 1 to 6, wherein
the different scene modes correspond to different image displays, or,
the different scene modes correspond to a same image display.

8. The imaging system of any one of claims 1 to 6, wherein when a plurality of image displays is comprised in the imaging system, some or all of the plurality of image displays support display for the cropped images corresponding to the different scene modes.

9. The imaging system of claim 1, wherein the image processor is further configured to receive an image display instruction, and the image display instruction comprises information of a scene mode to display an image.

10. The imaging system of any one of claims 1 to 3, wherein
the image capturing unit comprises a vehicle rearview camera,
the image display comprises an in-vehicle rearview mirror and a center control screen, and
the image processor is configured to determine the position information of the cropped images, corresponding to the different scene modes, on the image sensor by:
determining position information of a cropped image, corresponding to a streaming-media scene mode, on the image sensor and cropping an image captured by the vehicle rearview camera based on the position information to obtain the cropped image corresponding to the streaming scene mode; or
determining position information of a cropped image, corresponding to a vehicle-reversing scene mode, on the image sensor and cropping an image captured by the vehicle rearview camera based on the position information to obtain the cropped image corresponding to the vehicle-reversing scene mode.

11. The imaging system of claim 10, wherein the image processor is configured to transmit, based on the scene mode, the corresponding cropped image to the image display corresponding to the scene mode by:
transmitting the cropped image corresponding to the streaming-media scene mode to the in-vehicle rearview mirror; or
transmitting the cropped image corresponding to the vehicle-reversing scene mode to the center control screen.

12. An imaging method applied in an imaging system, wherein the imaging system comprises an image capturing unit, an image processor and an image display, and there is an offset between a center of an image sensor in the image capturing unit and an optical axis of an imaging lens module in the image capturing unit, the method comprising:
capturing an image by the image capturing unit;
by the image processor, determining position information of cropped images, corresponding to different scene modes, on the image sensor and cropping the image captured through the image capturing unit based on the position information to obtain the cropped images corresponding to the different scene modes, wherein at least two scene modes are supported by the imaging system, the position information of the cropped images, corresponding to the different scene modes, on the image sensor is not exactly the same;
based on a scene mode, transmitting a corresponding cropped image to the image display corresponding to the scene mode by the image processor; and
displaying the received cropped images by the image display.

13. The method of claim 12, wherein determining the position information of the cropped images, corresponding to the different scene modes, on the image sensor by the image processor comprises:
for any one of the different scene modes,
determining a field of view of a cropped image corresponding to the scene mode;
determining a size of the cropped image corresponding to the scene mode based on the field of view;
determining a position of a center of the cropped image, corresponding to the scene mode, on the image sensor based on the field of view and an offset position between the center of the image sensor and the optical axis of the imaging lens module; and
determining position information of the cropped image on the image sensor based on the size of the cropped image corresponding to the scene mode and the position of the center of the cropped image on the image sensor.

14. The method of claim 12, wherein determining the position information of the cropped images, corresponding to the different scene modes, on the image sensor by the image processor comprises:
for any one of the different scene modes, querying a pre-configured mapping table based on the scene mode to determine position information of a cropped image, corresponding to the scene mode, on the image sensor,
wherein the pre-configured mapping table records a correspondence between the scene mode and the position information of the cropped image on the image sensor.

15. The method of any one of claims 12 to 14, wherein determining the position information of the cropped images, corresponding to the different scene modes, on the image sensor by the image processor further comprises:
determining an image region corresponding to the position information of the image captured by the image capturing unit based on the position information; and
adjusting a boundary of the image region based on imaging feature information of the image region;
wherein cropping the image captured through the image capturing unit by the image processor based on the position information comprises:
cropping the image region, the boundary of which has been adjusted.

16. The method of claim 15, wherein the imaging feature information of the image region comprises at least one of:
a proportion of invalid information in the image region,
a degree of image distortion, or
a distribution of image vignetting regions.

17. The method of claim 15, further comprising:
processing, by the image processor, a resolution of the cropped image to a resolution of the image region, the boundary of which is not adjusted.

18. The method of any one of claims 12 to 17, wherein
the different scene modes correspond to different image displays, or,
the different scene modes correspond to a same image display.

19. The method of any one of claims 12 to 17, wherein when a plurality of image displays is comprised in the imaging system, some or all of the plurality of image displays support display for the cropped images corresponding to the different scene modes.

20. The method of claim 12, wherein the image processor is configured to receive an image display instruction, and the image display instruction comprises information of a scene mode to display an image.
